# EUROPÄISCHE PATENTSCHRIFT

(11) **EP 1 645 177 B1**
(45) Veröffentlichungstag und Bekanntmachung des Hinweises auf die Patenterteilung: **27.06.2007**
(21) Anmeldenummer: 05021452.7
(22) Anmeldetag: 30.09.2005
(51) Int. Cl.: A01C 15/00

(54) **Klappverdeck für Vorratsbehälter landwirtschaftlicher Verteilmaschinen**
Foldable lid for the hopper of an agricultural spreader
Toit repliable pour la trémie d'un épandeur agricole

(30) Priorität: 06.10.2004 DE 102004048622
(43) Veröffentlichungstag der Anmeldung: 12.04.2006
(73) Patentinhaber: Amazonen-Werke H. Dreyer GmbH & Co. KG, 49205 Hasbergen (DE)
(72) Erfinder: Kleine-Hartlage, Hubertus, 49186 Bad Iburg / Glane (DE)

(56) Entgegenhaltungen:
- DE-A1- 3 000 973
- DE-U- 7 416 468
- GB-A- 2 196 946

## Beschreibung

Die Erfindung betrifft ein Klappverdeck für Vorratsbehälter landwirtschaftlicher Verteilmaschinen. Mittels der aufdeckbaren Plane des Klappverdecks kann die Einfüllöffnung der Vorratsbehälter abgedeckt werden.

Derartige Klappverdecke sind in vielfältiger Weise bekannt.

So zeigt beispielsweise die deutsche Offenlegungsschrift 198 18 064 A1 einen Vorratsbehälter mit einem Klappverdeck, welches eine Plane aufweist. Diese Plane wird mittels eines die Einfüllöffnung überspannenden Traggestells oberhalb der Einfüllöffnung gehalten und kann mit dem Traggestell zumindest teilweise zur Seite geklappt werden, damit die Einfüllöffnung zum Befüllen des Vorratsbehälters zumindest teilweise offen ist.

Das DE 74 16 468 U1 zeigt eine klappbare Abdeckplane für Streugutbehälter. Die Plane ist an zwei Traggestellen befestigt und in der Mitte des Vorratsbehälters geteilt, so dass mittels des Traggestelles jede Planhälfte zur Seite geklappt werden kann, um die Einfüllöffnung freizugeben.

Die DE 30 00 973 C2 zeigt ein weiteres Klappverdeck für Streugutbehälter, welches an Traggestellen befestigte Planenhälften aufweist, die über das Traggestell zur Seite geklappt werden können, um die Einfüllöffnung freizugeben.

Die DE 29 51 071 A1 zeigt einen Planenheber für Lastkraftwagen, mittels welchem die Abdeckplane zur einen Längsseite weggeklappt werden kann.

Die GB-A-2196946 zeigt noch ein weiteres Klappverdeck mit den Merkmalen des Oberbegriffes des Anspruchs 1.

Der Erfindung liegt die Aufgabe zugrunde, ein Klappverdeck zu schaffen, welches mittels des Traggestelles zur einen Seite des Vorratsbehälters zur Seite geklappt werden kann, um so die Plane derart zur Seite zu klappen, so dass keine Planenteile in aufgeklappter Stellung des Klappverdeck in den Vorratsbehälter ragen.

Erfindungsgemäß wird diese Aufgabe durch die Merkmale des Patentanspruches 1 gelöst. Infolge dieser Maßnahmen wird einerseits gewährleistet, dass die Plane bei geschlossenem Klappverdeck giebeldachähnlich oberhalb der Einfüllöffnung des Vorratsbehälters gespannt ist, so dass Wasser sich nicht auf der Plane in muldenähnlichen Vertiefungen sammelt, sondern abläuft kann und andererseits bei geöffnetem Klappverdeck die Plane die Einfüllöffnung ausreichend weit frei gibt und keine Planenteile in den Vorratsbehälter hinein hängen. Somit werden keine Planenteile bei gefülltem Vorratsbehälter durch das eingefüllte Material festgeklemmt. Aufgrund der entsprechenden Ausgestaltung des scherenartigen Gestänges kann mit wenigen beweglichen Teilen des Klappverdeckes ein vorteilhaftes Klappverdeck geschaffen werden.

Um sicherzustellen, dass das Klappverdeck in gewünschter Weise mit der gewünschten Seite aufgedeckt wird, ist vorgesehen, dass jeweils einer der Basisträger im Bereich der Stirnwand und der Rückwand unverschwenkbar angeordnet ist. Hierbei werden jeweils die einander gegenüberliegenden Träger festgelegt

Eine vorteilhafte Aufgestaltung der Hebel des scherenartigen Gestänges ergibt sich dadurch, dass die doppelseitigen Hebel des scherenartigen Gestänges aus zwei im Bereich des Schwenkgelenkes zueinander abgewinkelten Teilen bestehen.

Um in bequemer Weise das Klappverdeck öffnen bzw. schließen zu können, ist vorgesehen, dass zwischen dem festgelegten Basisträger und den an dem festgelegten Basisträger angelenkten Hebel des scherenartigen Gestänges ein motorisches Stellelement angeordnet ist.

Weitere Einzelheiten der Erfindung sind der Beispielsbeschreibung und den Zeichnungen zu entnehmen. Hierbei zeigen
- Fig. 1: den Großflächendüngerstreuer mit Vorratsbehälter und dem erfindungsgemäßen Klappverdeck in geschlossener Stellung des Klappverdecks und in perspektivischer Ansicht,
- Fig. 2: das Klappverdeck in geschlossener Stellung in der Ansicht von hinten und in vergrößertem Maßstab,
- Fig. 3: das Klappverdeck in teilweise geöffneter Stellung in der Darstellungsweise nach Fig. 2 und
- Fig. 4: das Klappverdeck in geöffneter Stellung in der Darstellungsweise nach Fig. 2.

Der Vorratsbehälter 1 ist im Ausführungsbeispiel auf dem Rahmen 2 eines Großflächendüngerstreuers angeordnet. Die Einfüllöffnung 3 des Vorratsbehälters 1 wird durch das im oberen Bereich des Vorratsbehälters 1 angebrachte Klappverdeck 4, welches eine aufdeckbare Plane 5 aufweist, abgedeckt. Die Plane 5 ist an einem die Einfüllöffnung 3 überspannenden Traggestell 6 angeordnet. Das Traggestell 6 besitzt an der Stirn- 7 und Rückwand 8 des Vorratsbehälters 1 angeordnete und zueinander schwenkbare Basisträger 9 und 10. Die Basisträger 9, 10 sind mittels eines Gelenkes 11 miteinander verbunden. Die Schwenkachse 12 der Gelenke 11 der Basisträger 9,10 verläuft im Bereich der Vorratsbehältermitte.

An den Basisträgern 9,10 sind doppelseitige Hebel 13 und 14 des scherenartigen Gestänges 15 angelenkt. Die doppelseitigen Hebel 13, 14 sind mittels eines Gelenkes 16 miteinander verbunden und zueinander scherenartig verschwenkbar. Die doppelseitigen Hebel 12,13 des scherenartigen Gestänges bestehen aus zwei im Bereich des Schwenkgelenkes 15 zueinander abgewinkelten Teilen 12',12'',13',13''. Hierbei sind die abgewinkelten Teile 13'',14'' in geschlossener Stellung des Klappverdeckes 4 in Richtung der Behälteröffnung 3 abgewinkelt und der Neigung der Plane 5 angepasst. An den äußeren Enden 17 der Basisträger 9,10 sind die sich in Längsrichtung des Vorratsbehälters 1 erstreckenden Tragstangen 18 für die Plane 5 angeordnet. Die Tragstangen 18 sind zwischen den Basisträgern 9,10 der Vorder- und Rückseite angeordnet. Des Weiteren ist eine Tragstange 19 zwischen den doppelseitigen Hebeln 13,14 der Vorder- und Rückwand im Bereich des mittleren Gelenkpunktes 11 des scherenartigen Gestänges 15 angeordnet. Des Weiteren sind Tragstangen 20 zwischen den Enden 21 der doppelseitigen Hebeln des scherenartigen Gestänges 15 auf der Stirn- und Rückwand angeordnet. Insgesamt sind diese Tragstangen 18,19,20 aufgrund der Abwinklung der doppelseitigen Hebel 13,14 des scherenartigen Gestänges 15 so angeordnet, dass sie in Vorder- oder Rückansicht gesehen eine giebelartige Kontur einschließen. Hierdurch ergibt sich bei dem Spannen der Plane 5 über die Tragstangen 18,19,20 von der einen Längsseite des Vorratsbehälters 1 zur anderen Längsseite des Vorratsbehälters 1 in geschlossenem Zustand des Klappverdeckes 4 eine kontinuierliche schräge Dachneigung ohne Muldenbildung bei straff gespannter Plane 5. Wasser kann durch die Dachneigung der Plane 5 gut abfließen. Im Ausführungsbeispiel ist der in Fahrtrichtung 22 gesehen rechte Basisträger 10 mittels des als Schraube ausgebildeten Festlegungselement 23 unverschwenkbar sowohl an der Stirnwand 7 wie auch an der Rückwand 8 angeordnet. Hierdurch wird erreicht, dass das Klappverdeck 4 nur zur einen Seite in gewünschter Weise aufgeklappt werden kann. Zwischen dem festgelegten Basisträger 10 und dem an dem festgelegten Basisträger 10 angelenkten Hebel 14 des scherenartigen Gestänges 15 ist ein als doppelwinkender Hydraulikzylinder 24 ausgebildetes motorisches Stellelement angeordnet. Dieser Hydraulikzylinder 24 ist über nicht dargestellte Hydraulikleitungen mit einer Hydraulikanlage, beispielsweise mit der Hydraulikanlage des den Großflächendüngerstreuer ziehenden Schleppers verbunden.

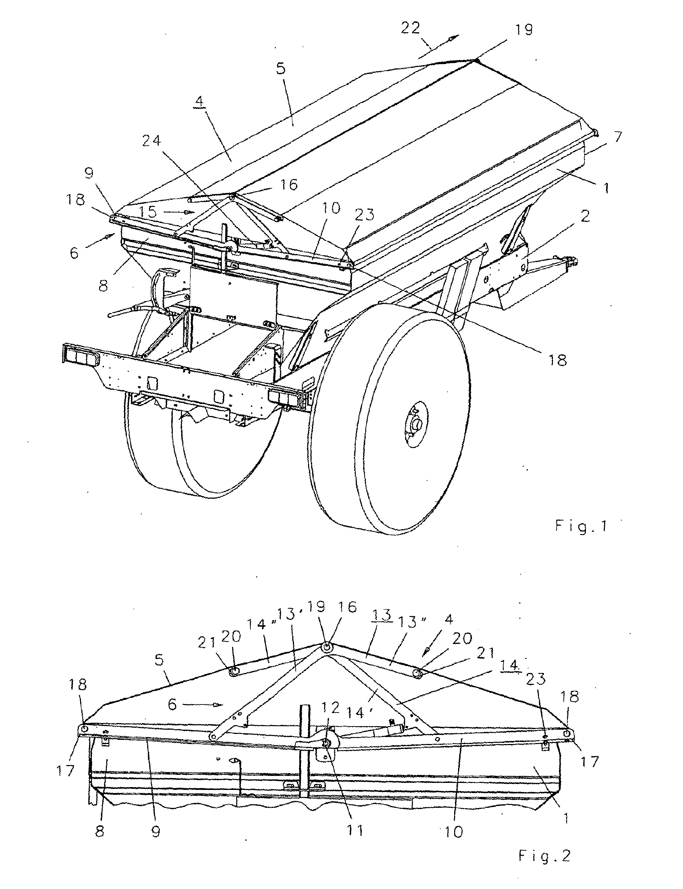

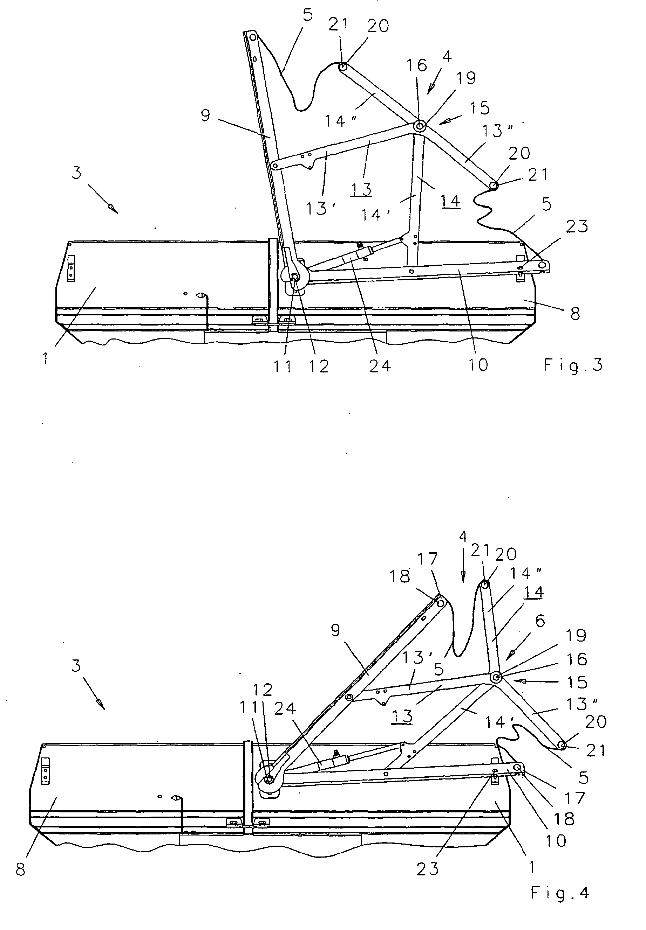

Um Material in den Vorratsbehälter 1 einfüllen zu können, muss das Klappverdeck 4 aufgeklappt werden, d.h. über die in Fig. 3 dargestellte Zwischenposition in die in Fig. 4 dargestellte aufgeklappte Position gebracht werden, d.h. das Klappverdeck 4 mit der Plane 5 deckt die Einfüllöffnung 3 nicht mehr ab. Dann kann Material in den Vorratsbehälter 1 eingefüllt werden. Wie insbesondere der Fig. 4 zu entnehmen ist, ist das Traggestell 6 mit den Tragstangen 18,19,20 derart ausgestaltet, dass die Plane 5 nicht in den Vorratsbehälter 1 hineinragt. Somit kann kein Material die Plane 5 festklemmen. Nach dem Befüllen des Vorratsbehälters wird durch Betätigen des Hydraulikzylinders 24 das Klappverdeck 4 aus der in Fig. 4 dargestellten Position in die in Fig. 1 und 2 dargestellte Position verschwenkt.

## Patentansprüche

1. Klappverdeck für Vorratsbehälter (1) landwirtschaftlicher Verteilmaschinen, dessen Einfüllöffnung (3) mit einer aufdeckbaren Plane (5) abgedeckt und wobei die Plane (5) an einem die Einfüllöffnung (3) überpannenden Traggestell (6) angeordnet ist, wobei das Traggestell (6) jeweils zwei an der Stirnwand (7) und der Rückwand (8) des Vorratsbehälters (1) angeordnete und zueinander um eine etwa in Bereich der Vorratsbehältermitte und in Längsrichtung des Vorratsbehälters (1) verlaufende Schwenkachse (12) verschenkbare Basisträger (9,10) aufweist, **dadurch gekennzeichnet, dass** an den Basisträgern (9,10) doppelseitige Hebel (13,14) eines scherenartigen Gestänges (15) angelenkt sind, dass an den äußeren Enden (17) der Basisträger (13,14) sich in Längsrichtung des Vorratsbehälters (1) erstreckende Tragstangen (18) für die Plane (5) angeordnet sind, dass in dem Bereich des mittleren Gelenkes (16) des scherenartigen Gestänges (15) die mittlere Tragstange (19) angeordnet ist, und dass an den Basisträgern (13,14) abgewandten Enden (21) der Hebel (13", 14") des scherenartigen Gestänges die zwischen dem an den Basisträgern und den im mittleren Gelenkpunkt (16) des scherenartigen Gestänges (15) angeordneten Tragstangen (19) jeweils eine weitere Tragstange (20) angeordnet ist.

2. Klappverdeck nach Anspruch 1, **dadurch gekennzeichnet, dass** jeweils einer der Basisträger (10) im Bereich der Stirnwand (7) und der Rückwand (8) unverschwenkbar angeordnet ist.

3. Klappverdeck nach Anspruch 1, **dadurch gekennzeichnet, dass** die doppelseitigen Hebel (13,14) des scherenartigen Gestänges 15 aus zwei im Bereich des Schwenkgelenkes (16) zueinander abgewinkelten Teilen (13', 13", 14', 14") bestehen.

4. Klappverdeck nach Anspruch 1, **dadurch gekennzeichnet, dass** zwischen dem festgelegten Basisträger (10) und den an dem festgelegten Basisträger (10) angelenkten Hebel (14) des scherenartigen Gestänges (15) ein motorisches Stellelement angeordnet ist.

## Claims

1. Foldable cover for hoppers (1) of agricultural distributors, the filling opening (3) of which is covered by an openable tarpaulin (5) and wherein the tarpaulin (5) is disposed at a supporting framework (6) that extends over the filling opening (3), wherein the supporting framework (6) includes respectively two base supports (9, 10), which are disposed at the end wall (7) and the rear wall (8) of the hopper (1) and are pivotable towards one another about a pivotal axis (12) that extends approximately in the region of the centre of the hopper and in the longitudinal direction of the hopper (1), **characterised in that** double-sided levers (13, 14) of a scissor-type boom (15) are pivotally mounted on the base supports (9, 10), **in that** supporting rods (18) that extend in the longitudinal direction of the hopper (1) for the tarpaulin (5) are disposed at the outer ends (17) of the base supports (13, 14), **in that** the central supporting rod (19) is disposed in the region of the central pivotal joint (11) of the scissor-type boom (15) and **in that** an additional supporting rod (20) is disposed at each of the ends (21) of the levers (13", 14") of the scissor-type boom remote from the base supports (13, 14) between the supporting rod (19) disposed on the base supports and the supporting rod (19) disposed in the central pivotal point (16) of the scissor-type boom (15).

2. Foldable cover according to claim 1, **characterised in that** in each case one of the base supports (10) is disposed so as to be non pivotal in the region of the end wall (7) and of the rear wall (8).

3. Foldable cover according to claim 1, **characterised in that** the double-sided levers (13, 14) of the scissor-type boom (15) comprise two parts (13', 13", 14', 14") that are set at an angle one relative to the other in the region of the pivotal joint (16).

4. Foldable cover according to claim 1, **characterised in that** a motor-driven adjusting element is disposed between the fixed base support (10) and the levers (14) of the scissor-type boom (15) that are pivotally mounted on the fixed base support (10).

## Revendications

1. Toit repliable pour la trémie (1) d'un distributeur agricole dont l'ouverture de remplissage (3) est couverte par une bâche (5) repliable portée par un châssis (6) couvrant l'ouverture de remplissage (3), le châssis (6) ayant au niveau de la paroi frontale (7) et de la paroi arrière (8) de la trémie (1) chaque fois deux bras de base (10) pivotant autour d'un axe de pivotement (12) dirigé dans la direction longitudinale de la trémie (1), sensiblement dans la zone du milieu de la trémie et dans sa direction longitudinale,
**caractérisé en ce que**
les bras de base (9, 10) portent, de façon articulée, des leviers à deux bras (13, 14) d'une tringlerie (15) en forme de ciseaux,
les extrémités extérieures (17) des bras de base (13, 14) portent des barres de support (18) pour la bâche (5), s'étendant dans la direction longitudinale de la trémie (1),
dans la zone de l'articulation intermédiaire (16) de la tringlerie en forme de ciseaux (15), il y a une barre de support intermédiaire (19), et
une autre barre de support (20) est prévue à chaque extrémité (21), des leviers (13", 14") de la tringlerie en forme de ciseaux, à l'opposé de celle des bras de base (13, 14), et des barres de support (19) au point d'articulation intermédiaire (16) de la tringlerie (15) en forme de ciseaux.

2. Toit repliable selon la revendication 1,
**caractérisé en ce que**
l'un des bras de base (10) est non pivotant au niveau de la paroi frontale'(7) et de la paroi arrière 8.

3. Toit repliable selon la revendication 1,
**caractérisé en ce que**
les leviers à deux bras (13, 14) de la tringlerie en forme de ciseau (15) se composent de deux parties coudées (13', 13", 14', 14") dans la zone de l'axe d'articulation (16).

4. Toit repliable selon la revendication 1,
**caractérisé par**
un élément d'actionnement à moteur entre le bras de base (10) fixe et le levier (14) de la tringlerie en forme de ciseaux (15), articulé sur le bras de base fixe (10).
